# FASCICULE DE BREVET EUROPEEN

(11) **EP 1 186 884 B1**
(45) Date de publication et mention de la délivrance du brevet: **02.09.2009**
(21) Numéro de dépôt: 01402307.1
(22) Date de dépôt: 06.09.2001
(51) Int. Cl.: G01N 27/20

(54) **Procédé de test de pièces dit "par haute tension" avec neutralisation des courants de fuite et dispositif de test correspondant**
Verfahren für die sogenannte "Prüfung durch Hochspannung" von Bestandteilen unter Verhinderung von Leckströmen und dazu geeignete Prüfvorrichtung
So-called "high voltage" method for testing components with elimination of the leakage currents and device suitable therefor

(30) Priorité: 06.09.2000 FR 0011347
(43) Date de publication de la demande: 13.03.2002
(73) Titulaire: ATEQ, 78340 Les Clayes sous Bois (FR)
(72) Inventeur: Mouchet, Jacques, 78860 Saint Nom la Breteche (FR); Lemartinel, Christophe, 78800 Houilles (FR)
(74) Mandataire: Roger, Walter

(56) Documents cités:
- GB-A- 2 034 898
- US-A- 2 750 562
- US-A- 3 919 635

## Description

L'invention concerne un procédé de test de pièces dit "par haute tension" avec neutralisation des courants de fuite et le dispositif de test correspondant.

On sait que ce procédé permet de tester l'intégrité (trou, fissure, porosité etc...) d'une pièce en matériau isolant pourvue ou non d'éléments en matériau conducteur intégré.

Il met en oeuvre deux électrodes de part et d'autre de la zone de la pièce à tester, respectivement une électrode de charge à plusieurs dizaines de Kvolts et une électrode secondaire à potentiel flottant ou non, généralement à la masse. Un dispositif permettant la mise en oeuvre d'un tel procédé est connu du document US-A-3 919 635. Néanmoins, ce procédé est pénalisé par des courants de fuite périphériques à la zone à tester et qui sont variables en fonction de l'état de surface de la pièce, de sa charge électrostatique préalable, de l'humidité, des parties de rupture de surface éventuelles à la périphérie de ladite zone etc... Ces courants de fuite gênent la mesure sur la zone de test, créant une composante de bruit parasite qui diminue la sensibilité de la mesure.

L'invention vise à remédier à cet inconvénient et propose un procédé de test "par haute tension" de l'intégrité d'une pièce isolante électrique pourvue ou non d'éléments en matériau conducteur intégré, de type mettant en oeuvre une charge à haute tension électrique d'une zone à tester de ladite pièce, par exemple, au moyen de deux électrodes disposées de part et d'autre de la zone à tester, respectivement une électrode chargée à haute tension et une électrode secondaire à potentiel flottant ou non, généralement à la masse, le défaut d'intégrité de la zone à tester étant décelé par la mesure du courant de décharge de l'électrode chargée à haute tension vers l'électrode secondaire, **caractérisé en ce qu**'il met en oeuvre un effet de décharge électrique contrôlé des courants de fuite périphériques à ladite zone de test, au moyen d'au moins une électrode auxiliaire de charge, disposée à la périphérie de la zone de test sur ladite pièce et dont la géométrie et la charge électrique de haute tension sont adaptées pour produire une décharge des courants de fuite périphériques à ladite zone de test vers l'électrode secondaire sans influence ou minime sur la charge de la zone de test.

Il résulte de ce procédé selon l'invention que la mesure du courant de décharge, dû à un défaut, sur la zone de test de l'électrode classique de charge à l'électrode secondaire ne prend plus en compte ou seulement de façon très minime les courants de fuite périphériques à la zone de test, lesquels sont alimentés directement par l'électrode auxiliaire vers l'électrode secondaire, ceci au bénéfice de la sensibilité de cette mesure, ce qui permet de déceler des défauts d'intégrité plus petits sur la zone de test relativement au procédé classique.

L'invention concerne également le dispositif de mise en oeuvre du procédé défini précédemment.

Le dispositif de test selon l'invention, destiné à tester l'intégrité d'une pièce isolante électrique pourvue ou non d'éléments en matériau conducteur intégré, comprend au moins une électrode principale chargée à haute tension électrique disposée en regard de la zone de test de ladite pièce, au moins une électrode secondaire à potentiel flottant ou non, généralement à la masse, disposée de l'autre côté de ladite zone de test relativement à l'électrode principale, au moins une électrode auxiliaire chargée à haute tension électrique et disposée sensiblement à la périphérie de la zone de test, de géométrie et charge électrique adaptées pour alimenter les courants de fuite en périphérie de la zone de test sans influence sur la charge de l'électrode principale, et un circuit de mesure du courant de décharge de l'électrode principale vers l'électrode secondaire, apte à traduire un défaut d'intégrité de ladite zone de la pièce à tester.

Naturellement, la conformation des pièces à tester est variable et de même celle adaptée des électrodes précitées, lesquelles peuvent en outre être mobiles.

L'invention est illustrée ci-après à l'aide d'un exemple de réalisation décrit en référence au dessin annexé, sur lequel :
- La figure 1 est une vue schématique en coupe médiane d'un dispositif de test par haute tension selon l'invention d'une pièce en matière plastique de type bouchon de bouteille,
- La figure 2 est une vue schématique simplifiée du circuit électrique correspondant, et
- La figure 3 montre une variante de réalisation.

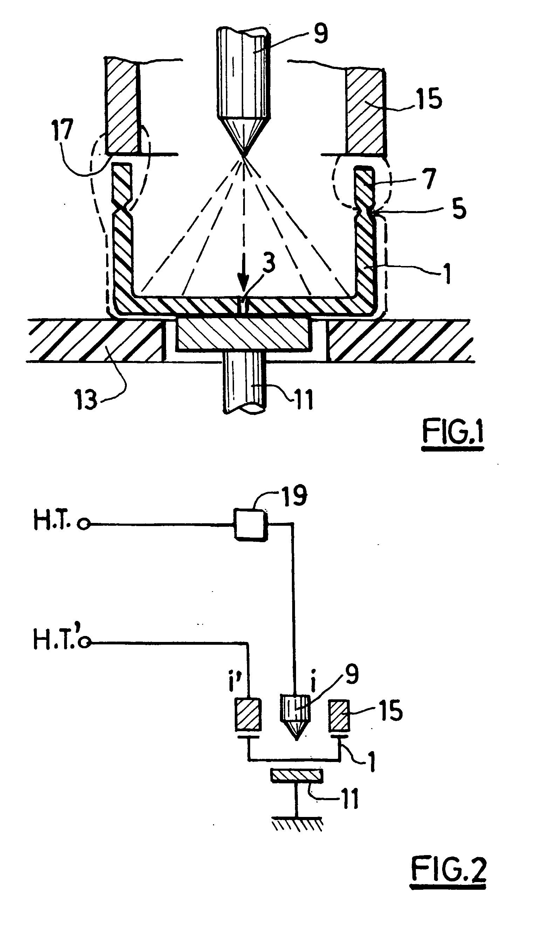

Avec référence à la figure 1, le dispositif selon l'invention est appliqué, à titre d'exemple illustratif, à la mesure de l'éventuelle fuite d'un bouchon 1 de bouteille en matière plastique de type "eau minérale". En effet, un tel bouchon obtenu par injection de matière plastique peut être défectueux par perforation ou porosité notamment au niveau du point d'injection 3 et son étanchéité doit être contrôlée avant montage. Le test peut être réalisé à cadence élevée, le temps de charge du bouchon étant très faible, de l'ordre de quelques millisecondes.

Un tel bouchon présente des zones de rupture régulières 5 au niveau de sa jupe délimitant une ceinture annulaire 7, formant témoin d'ouverture de la bouteille. Ces zones de rupture 5 sont sujettes à des courants de fuite latérale relativement importants (cf lignes de boucle en trait interrompu) lors de l'application du test "haute tension".

Ces courants de fuite latérale sont également créés dans le dispositif de test "haute tension" classique, lequel utilise comme dans le dispositif selon l'invention (fig. 1) une électrode de pointe principale supérieure 9, chargée en courant de haute tension (quelques dizaines de Kvolts) et une électrode secondaire inférieure 11, reliée à la masse électrique et solidaire d'un guide isolant 13 des bouchons testés. Ces courants pénalisent lourdement la mesure du courant de décharge de l'électrode principale 9 vers l'électrode de masse 11 sur un défaut de la zone de test, laquelle environne le point d'injection 3 du bouchon (sensiblement le fond du bouchon). En effet, ils participent à la création d'un signal de bruit variable dans le signal de mesure dont celui-ci doit se distinguer.

Il est à noter que l'électrode secondaire 11 n'est pas nécessairement à un potentiel 0 ou de masse électrique mais qu'elle peut être à un potentiel dit flottant, par exemple négatif, engendrant de toute façon une différence de potentiel de quelques dizaines de Kvolts avec l'électrode de charge principale.

Le dispositif selon l'invention utilise en plus du dispositif de test classique une électrode auxiliaire 15, également chargée en courant de haute tension électrique (à quelques dizaines de Kvolts) et qui neutralise les courants de fuite du courant de mesure principale.

L'électrode auxiliaire 15 a une forme annulaire dont le bord inférieur plan 17 est disposé proche du bord périphérique supérieur du bouchon 1. La largeur de ce bord 17 est légèrement supérieure à celle du bord du bouchon 1.

La disposition des électrodes, en raison de la forme circulaire du bouchon, comporte une symétrie axiale, l'électrode principale 9 et l'électrode secondaire 11 se trouvant dans l'axe du bouchon de part et d'autre de sa paroi de fond. En outre, l'électrode principale 9 est orientée vers la cavité du bouchon et l'électrode secondaire 11 disposée sous le fond.

Le circuit de mesure du dispositif de l'invention est représenté à la figure 2.

L'électrode principale 9 est reliée à une source de courant à haute tension HT, de quelques dizaines de kilovolts et de même l'électrode auxiliaire 15 est reliée à une source de courant haute tension HT', de valeur égale à HT ou différente. Naturellement et de façon classique, ces lignes à haute tension sont pourvues de résistances adéquates non représentées protégeant l'opérateur et empêchant toute décharge de courant par arc électrique.

La ligne de l'électrode auxiliaire 15 est traversée par un courant i', lequel alimente la décharge entretenue (sans arc électrique) des courants de fuite, représentés en trait interrompu, du bord du bouchon vers l'électrode secondaire 11.

La ligne d'électrode principale 9 participe à la charge électrique de la zone de fond du bouchon comme un condensateur (cf les lignes en trait interrompu à partir de l'électrode), le courant de charge étant très faible. Le courant de fuite i sur un trou éventuel du fond est plus important et forme un pic de discontinuité dans la courbe du signal de mesure du courant.

C'est ce courant de fuite dû au défaut de la zone à tester qui est mesuré relativement au courant de charge. Ce courant est mesuré au moyen d'un bloc de mesure 19 classique disposé sur la ligne d'électrode principale. La mesure du courant i, isolé du courant i' inévitable sans le recours à l'électrode auxiliaire, permet de déceler l'amplitude des défauts de la zone de fond et d'une façon nettement plus sensible qu'auparavant. Le facteur d'augmentation de la sensibilité de détection des défauts est au moins de l'ordre de 5 dans l'exemple, permettant ainsi de déceler des défauts de trous de 1 p au lieu de 5 µ minimum par la technique classique.

Il est à noter que le bord plan 17 de l'électrode auxiliaire n'a pas d'effet de champs étendu contrairement à l'électrode de pointe supérieure 9 et qu'elle n'induit pas de charge électrique sur la zone de fond à tester du bouchon. Ainsi, le courant i de mesure est seulement celui induit par l'électrode principale 9.

De plus, la conformation des électrodes est variable pour s'adapter à celle des pièces à tester et de même le réglage de leur courant respectif, de façon à isoler leur effet, ces électrodes pouvant en outre être mobiles l'une par rapport à l'autre, par exemple pour pénétrer à l'intérieur de cavités, et l'électrode auxiliaire former également joint de fermeture.

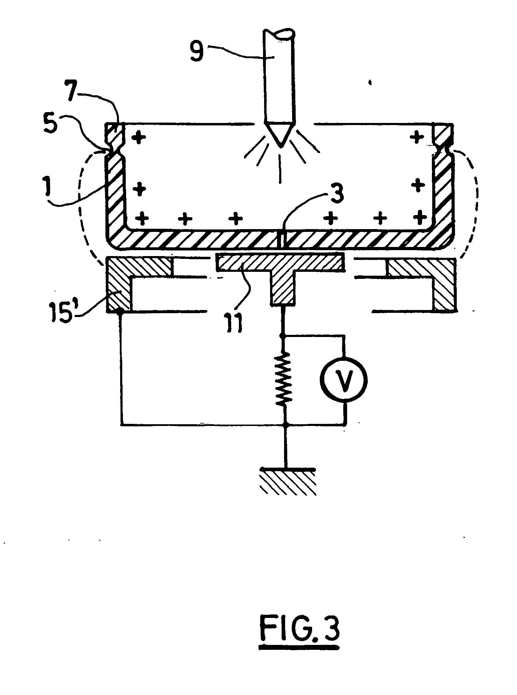

Enfin, avec référence à la fig. 3, l'électrode auxiliaire peut être chargée à un potentiel très différent de l'électrode de charge 9, voire négatif, ou être à la masse comme représenté sur la figure jouant alors le rôle d'électrode auxiliaire secondaire pour les courants de fuite latéraux, émis à partir des zones de rupture 5 (cf. les lignes de boucle en trait interrompu) sous la charge de l'électrode principale 9.Dans le cas présent, l'électrode auxiliaire a une forme annulaire dont le diamètre est sensiblement équivalent à celui du bouchon, étant disposée sous le bouchon et autour de l'électrode secondaire 11, sur un même plan, coaxialement à celle-ci.

Cette électrode auxiliaire est suffisamment proche des zones susceptibles d'émettre des courants de fuite parasites, ici à l'aplomb vertical de la zone de rupture 5, et suffisamment distante de l'électrode secondaire 11, pour empêcher la décharge du courant de fuite d'un défaut, ici du point d'injection 3 du bouchon, sur celle-ci.

Le circuit électrique correspondant est représenté de façon schématique sous le dispositif. Le courant de fuite d'un défaut isolé des courants de fuite parasites latéraux est mesuré de façon simple par.un voltmètre relié en parallèle aux bornes d'une résistance elle-même connectée à la masse, et de même l'électrode auxiliaire.

Naturellement, l'invention n'est pas limitée au test d'un bouchon, mais est applicable à toute autre pièce en matériau isolant pourvue ou non d'éléments en matériau conducteur intégré.

## Revendications

1. Procédé de test "par haute tension" de l'intégrité d'une pièce isolante électrique (1) pourvue ou non d'éléments en matériau conducteur intégré, de type mettant en oeuvre une charge à haute tension électrique d'une zone à tester de ladite pièce, par exemple, au moyen de deux électrodes disposées de part et d'autre de la zone à tester, respectivement une électrode chargée à haute tension (9) et une électrode secondaire (11) à potentiel flottant ou non, généralement à la masse, le défaut d'intégrité de la zone à tester étant décelé par la mesure du courant de décharge (i) de l'électrode chargée à haute tension (9), **caractérisé en ce qu'**il met en oeuvre un effet de décharge électrique contrôlé des courants de fuite (i') périphériques à ladite zone de test, au moyen d'au moins une électrode auxiliaire de charge (15, 15') disposée à la périphérie de la zone de test sur ladite pièce (1) et dont la géométrie et la charge électrique sont adaptées pour produire une décharge des courants de fuite (i') périphériques à ladite zone de test et sans influence ou minime sur la charge de la zone de test.

2. Dispositif de test pour la mise en oeuvre du procédé selon la revendication 1, destiné à tester l'intégrité d'une pièce isolante électrique (1) pourvue ou non d'éléments en matériau conducteur intégré, **caractérisé en ce qu'**il comprend au moins une électrode principale (9) chargée à haute tension électrique disposée en regard de la zone de test de ladite pièce, au moins une électrode secondaire (11) à potentiel flottant ou non, généralement à la masse, disposée de l'autre côté de ladite zone de test relativement à l'électrode principale (9), au moins une électrode auxiliaire (15,15') et disposée sensiblement à la périphérie de la zone de test, de géométrie et charge électrique adaptées pour alimenter les courants de fuite (i') en périphérie de la zone de test, sans influence sur la charge de l'électrode principale (9), et un circuit de mesure (19) du courant de décharge (i) de l'électrode principale (9), apte à traduire un défaut d'intégrité de ladite zone de la pièce à tester.

3. Dispositif de test selon la revendication 2, **caractérisé en ce que** la conformation des électrodes (9, 11) et (15,15') est variable, adaptée à celle des pièces à tester.

4. Dispositif de test selon l'une des revendications 2 et 3, **caractérisé en ce que** pour le test d'étanchéité d'un bouchon (1) de conformation circulaire, il comporte une électrode en pointe supérieure (9) orientée vers la cavité du bouchon (1), une électrode secondaire (11) à potentiel flottant ou non, généralement à la masse, sous le fond du bouchon (1), et une électrode annulaire (15) de bord plan (17) disposé proche du bord périphérique du bouchon, l'ensemble présentant une symétrie axiale.

5. Dispositif de test selon la revendication 4, **caractérisé en ce que** le bord plan (17) de l'électrode auxiliaire (15) a une largeur légèrement supérieure à celle du bord périphérique du bouchon (1).

6. Dispositif de test selon la revendication 2 ou 3, **caractérisé en ce que** l'électrode auxiliaire (15') est chargée à un potentiel très différent de l'électrode de charge (9), voire à la masse, jouant alors dans ce dernier cas le rôle d'électrode secondaire auxiliaire pour les courants de fuite parasites relativement à l'électrode de charge (9).

## Claims

1. "High voltage" method for testing the integrity of an electrical insulating part (1) which may or may not be provided with elements made of an integrated conductive material, of the type using a high-voltage electric charge of a zone to be tested of the said part, for example, by means of two electrodes placed on either side of the zone to be tested, respectively a high-voltage-charged electrode (9) and a secondary electrode (11) that may or may not be at a floating potential, usually earthed, the defect of integrity of the zone to be tested being revealed by the measurement of the discharge current (i) of the high-voltage-charged electrode (9), **characterized in that** it uses a controlled electric discharge effect of the leakage currents (i') peripheral to the said test zone, by means of at least one auxiliary charge electrode (15, 15') placed on the periphery of the test zone on the said part (1) and the geometry and the electric charge of which are adapted to produce a discharge of the leakage currents (i') peripheral to the said test zone and having no or minimal influence on the charge of the test zone.

2. Test device for applying the method according to Claim 1, designed to test the integrity of an electrical insulating part (1) which may or may not be provided with elements made of an integrated conductive material, **characterized in that** it comprises at least one main electrode (9) charged to a high electrical voltage placed facing the test zone of the said part, at least one secondary electrode (11) which may or may not be at a floating potential, usually earthed, placed on the other side of the said test zone relative to the main electrode (9), at least one auxiliary electrode (15, 15') and placed substantially on the periphery of the test zone, with a geometry and electric charge suitable for supplying the leakage currents (i') on the periphery of the test zone, without any influence on the charge of the main electrode (9), and a circuit (19) for measuring the discharge current (i) of the main electrode (9), capable of reflecting a defect of integrity of the said zone of the part to be tested.

3. Test device according to Claim 2, **characterized in that** the conformation of the electrodes (9, 11) and (15, 15') is variable, adapted to that of the parts to be tested.

4. Test device according to one of Claims 2 and 3, **characterized in that**, for the test of the seal of a stopper (1) of circular conformation, it comprises an upper pointed electrode (9) oriented towards the cavity of the stopper (1), a secondary electrode (11) which may or may not be at a floating potential, usually earthed, beneath the bottom of the stopper (1), and an annular electrode (15) with a flat edge (17) placed close to the peripheral edge of the stopper, the assembly having an axial symmetry.

5. Test device according to Claim 4, **characterized in that** the flat edge (17) of the auxiliary electrode (15) has a width that is slightly greater than that of the peripheral edge of the stopper (1).

6. Test device according to Claim 2 or 3, **characterized in that** the auxiliary electrode (15') is charged to a potential that is very different from the charge electrode (9), and even earthed, then, in the latter case, acting as a secondary auxiliary electrode for the leakage currents that are eddy currents relative to the charge electrode (9).

## Patentansprüche

1. Verfahren zum Testen "mit einer hohen Spannung" der Integrität eines elektrisch isolierenden Teils (1), das mit integrierten Elementen aus leitendem Material versehen ist oder nicht, von der Art, dass eine Ladung mit hoher elektrischer Spannung auf eine zu testende Zone des Teils aufgebracht wird, beispielsweise mittels zweier Elektroden, die auf der einen und der anderen Seite der zu testenden Zone angeordnet sind, jeweils eine mit einer hohen Spannung geladene Elektrode (9) und eine Sekundärelektrode (11) mit einem schwebenden Potential oder nicht, im Allgemeinen an Masse, wobei der Fehler der Integrität der zu testenden Zone festgestellt wird durch Messen des Entladestroms (i) der mit einer hohen Spannung geladene Elektrode (9),
**dadurch gekennzeichnet, dass**
es einen Effekt der kontrollierten elektrischen Entladung der peripheren Leckströme (i') an der Testzone verwirklicht mittels zumindest einer Hilfsladungselektrode (15, 15'), die an einem Rand der Testzone über dem Teil (1) angeordnet ist und deren Geometrie und elektrische Ladung daran angepasst sind, ein Entladen der peripheren Leckströme (i') an der Testzone hervorzurufen ohne oder mit minimalem Einfluss auf die Ladung der Testzone.

2. Testvorrichtung zum Durchführen des Verfahrens gemäß Anspruch 1, dazu bestimmt, die Integrität eines elektrisch isolierenden Teils (1) zu testen, das mit integrierten Elementen aus leitendem Material versehen ist oder nicht,
**dadurch gekennzeichnet, dass** sie enthält:
zumindest eine mit einer hohen Spannung geladene Primärelektrode (9), die der Testzone des Teils gegenüber angeordnet ist,
zumindest eine Sekundärelektrode (11) mit einem schwebenden Potential oder nicht, im Allgemeinen an Masse, die relativ zu der Primärelektrode (9) auf der anderen Seite der Testzone angeordnet ist,
zumindest eine Hilfselektrode (15, 15'), die im Wesentlichen an der Peripherie der Testzone angeordnet ist, mit einer Geometrie und einer Ladung, die daran angepasst sind, die peripheren Leckströme (i') an der Testzone ohne Einfluss auf die Ladung der Primärelektrode (9) zu speisen, und
eine Messschaltung (19) für den Entladestrom (i) der Primärelektrode (9), die daran angepasst ist, einen Fehler der Integrität der Zone des zu testenden Teils (1) kundzutun.

3. Testvorrichtung gemäß Anspruch 2, **dadurch gekennzeichnet, dass** die Gestaltung der Elektroden (9, 11) und (15, 15') variabel ist angepasst an diejenige der zu testenden Teile.

4. Testvorrichtung gemäß einem der Ansprüche 2 und 3, **dadurch gekennzeichnet, dass** sie für den Dichtetest einer Kappe (1) mit kreisförmiger Gestaltung enthält:
eine obere Spitzenelektrode (9), die zu dem Hohlraum der Kappe (1) hin gerichtet ist,
eine Sekundärelektrode (11), mit einem schwebenden Potential oder nicht, im Allgemeinen an Masse, unter dem Boden der Kappe (1), und
eine Ringelektrode (15) mit flachem Rand (17), die nahe dem Umfangsrand der Kappe angeordnet ist,
wobei das Ensemble eine Axialsymmetrie aufweist.

5. Testvorrichtung gemäß Anspruch 4, **dadurch gekennzeichnet, dass** der flache Rand (17) der Hilfselektrode (15) eine Breite aufweist, die geringfügig größer als diejenige des Umfangsrands der Kappe (1) ist.

6. Testvorrichtung gemäß einem der Ansprüche 2 und 3, **dadurch gekennzeichnet, dass** die Hilfselektrode (15') auf ein Potential geladen ist, das sehr verschieden von dem der Ladungselektrode (9) ist, sogar an Masse, wobei sie in dem letzteren Fall die Rolle der der Sekundärhilfselektrode für die parasitären Leckströme relativ zu der Ladungselektrode (9) spielt.
